# EUROPEAN PATENT APPLICATION

(11) **EP 4 572 526 A1**
(43) Date of publication of application: **18.06.2025**
(21) Application number: 23852928.3
(22) Date of filing: 08.08.2023
(51) Int. Cl.: H04W 76/28, H04W 52/02, H04W 24/08, H04W 72/04

(54) **SIGNAL TRANSMISSION/RECEPTION METHOD FOR WIRELESS COMMUNICATION, AND APPARATUS THEREFOR**

(30) Priority: 11.08.2022 KR 20220100581
(71) Applicant: LG Electronics Inc., Yeongdeungpo-gu Seoul 07336 (KR)
(72) Inventor: LEE, Sunghoon, Seoul 06772 (KR); HWANG, Seunggye, Seoul 06772 (KR); KIM, Jaehyung, Seoul 06772 (KR); YANG, Suckchel, Seoul 06772 (KR)
(74) Representative: Plasseraud IP
(86) International application number: PCT/KR2023/011641
(87) International publication number: WO 2024/035052

(57) **Abstract**

A method by which a terminal receives signals in a wireless communication system, according to one embodiment, comprises: receiving a discontinuous reception (DRX) configuration related to DRX on-duration, and a search space set configuration related to physical downlink control channel (PDCCH) monitoring occasions (MOs); and monitoring a PDCCH on the basis of the DRX on-duration and the PDCCH MOs, wherein time-alignment is performed between the DRX on-duration related to the DRX configuration and the PDCCH MOs related to the search space set configuration, at least one of the PDCCH MOs is configured, on the basis of the time-alignment between the DRX on-duration and the PDCCH MOs, to a time resource for which the DRX on-duration is started, and monitoring of the PDCCH can be started from the time resource for which the DRX on-duration is started.

## Description

### [Technical Field]

The present disclosure relates to wireless communication, and more particularly, to a method of transmitting or receiving an uplink/downlink signal in a wireless communication system and apparatus therefor.

### [Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### [Disclosure]

### [Technical Problem]

The object of the present disclosure is to provide a method of transmitting and receiving signals more accurately and efficiently.

The objects of present disclosure are not limited to what has been particularly described hereinabove, and other objects that the present disclosure could achieve will be more clearly understood from the following detailed description.

### [Technical Solution]

In one aspect, a method of receiving a signal by a user equipment (UE) in a wireless communication system may include receiving a discontinuous reception (DRX) configuration related to a DRX on-duration and a search space set configuration related to physical downlink control channel (PDCCH) monitoring occasions (MOs), and monitoring a PDCCH based on the DRX on-duration and the PDCCH MOs, wherein time-alignment may be performed between the DRX on-duration related to the DRX configuration and the PDCCH MOs related to the search space set configuration, wherein based on the time-alignment between the DRX on-duration and the PDCCH MOs, at least one of the PDCCH MOs is configured on a time resource in which the DRX on-duration starts, wherein the monitoring of the PDCCH may be started from the time resource in which the DRX on-duration starts. An initial PDCCH MO among the PDCCH MOs may be time-aligned with the start of the DRX on-duration.

A periodicity of the PDCCH MOs may restart in a start slot of the DRX on-duration.

Based on a PDCCH MO not being configured in the start slot of the DRX on-duration, at least one of the PDCCH MOs may be shifted to the start slot of the DRX on-duration.

Based on a PDCCH MO not being configured in the start slot of the DRX on-duration, at least one PDCCH MO may be additionally configured.

One of the at least one additionally configured PDCCH MO may be positioned in the start slot of the DRX on-duration.

The start slot of the DRX on-duration may be determined based on the PDCCH MOs.

The PDCCH may be related to scheduling of eXtended Reality (XR) traffic, and the UE may receive a physical downlink shared channel (PDSCH) containing the XR traffic based on the PDCCH.

In another aspect, a computer-readable recording medium storing instructions for performing the above-described method may be provided.

In another aspect, a UE for performing the above- described method may be provided.

In another aspect, a device for controlling a UE for performing the above-described method may be provided.

In another aspect, a method of transmitting a signal by a base station in a wireless communication system may include transmitting a discontinuous reception (DRX) configuration related to a DRX on-duration and a search space set configuration related to physical downlink control channel (PDCCH) monitoring occasions (MOs), and transmitting a PDCCH based on the DRX on-duration and the PDCCH MOs, wherein time-alignment may be performed between the DRX on-duration related to the DRX configuration and the PDCCH MOs related to the search space set configuration, wherein, based on the time-alignment between the DRX on-duration and the PDCCH MOs, at least one of the PDCCH MOs is configured on a time resource in which the DRX on-duration starts, wherein the base station may transmit the PDCCH on the time resource in which the DRX on-duration starts. In another aspect, a base station for performing the above- described method may be provided.

### [Description of Drawings]

According to an embodiment of the present disclosure, signal transmission and reception can be performed more accurately and efficiently in a wireless communication system.

The effects of present disclosure are not limited to what has been particularly described hereinabove, and other effects that the present disclosure could achieve will be more clearly understood from the following detailed description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates a random access procedure.
FIG. 5 illustrates an example of physical channel mapping.
FIGS. 6 and 7 are diagrams illustrating PDCCH monitoring based on search space set configuration and DRX configuration.
FIG. 8 is a diagram illustrating a time alignment between DRX-on duration and PDCCH MO according to one embodiment.
FIG. 9 is a diagram illustrating PDCCH monitoring based on SS sets.
FIG. 10 is a diagram illustrating time alignment between drx-onDuration and PDCCH MOs according to one embodiment.
FIG. 11 is a diagram illustrating time alignment between drx-onDuration and PDCCH MO according to another embodiment.
FIG. 12 is a diagram illustrating time alignment between drx-onDuration and PDCCH MO according to another embodiment.
FIG. 13 is a diagram illustrating a UE operation for time alignment between drx-onDuration and PDCCH MO according to one embodiment.
FIG. 14 is a diagram illustrating a flow of a method of receiving a signal by a UE according to one embodiment.
FIG. 15 is a diagram illustrating a flow of a method of transmitting a signal by a base station according to one embodiment.
FIG. 16 is a diagram illustrating a flow of a method of transmitting and receiving signals over a network according to one embodiment.
FIGS. 17 and 18 illustrate a communication system 1 and wireless devices applied to the present disclosure.

### [Mode for Disclosure]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto. LTE refers to technologies after 3GPP TS 36.xxx Release 8. Specifically, LTE technologies after 3GPP TS 36.xxx Release 10 are referred to as LTE-A, and LTE technologies after 3GPP TS 36.xxx Release 13 are referred to as LTE-A pro. 3GPP NR refers to technologies after TS 38.xxx Release 15. LTE/NR may be referred to as 3GPP systems. In this document, "xxx" represents the detail number of a specification. LTE/NR may be collectively referred to as 3GPP systems.

Details of the background, terminology, abbreviations, etc. used herein may be found in documents published before the present disclosure. For example, the present disclosure may be supported by the following documents:
3GPP NR
   - 3GPP TS 38.211: Physical channels and modulation
   - 3GPP TS 38.212: Multiplexing and channel coding
   - 3GPP TS 38.213: Physical layer procedures for control
   - 3GPP TS 38.214: Physical layer procedures for data
   - 3GPP TS 38.215: Physical layer measurements
   - 3GPP TS 38.300: NR and NG-RAN Overall Description
   - 3GPP TS 38.304: User Equipment (UE) procedures in idle mode and in RRC inactive state
   - 3GPP TS 38.321: Medium Access Control (MAC) protocol
   - 3GPP TS 38.322: Radio Link Control (RLC) protocol
   - 3GPP TS 38.323: Packet Data Convergence Protocol (PDCP)
   - 3GPP TS 38.331: Radio Resource Control (RRC) protocol
   - 3GPP TS 37.324: Service Data Adaptation Protocol (SDAP)
   - 3GPP TS 37.340: Multi-connectivity; Overall description
   - 3GPP TS 23.287: Application layer support for V2X services; Functional architecture and information flows
   - 3GPP TS 23.501: System Architecture for the 5G System
   - 3GPP TS 23.502: Procedures for the 5G System
   - 3GPP TS 23.503: Policy and Charging Control Framework for the 5G System; Stage 2
   - 3GPP TS 24.501: Non-Access-Stratum (NAS) protocol for 5G System (5GS); Stage 3
   - 3GPP TS 24.502: Access to the 3GPP 5G Core Network (5GCN) via non-3GPP access networks
   - 3GPP TS 24.526: User Equipment (UE) policies for 5G System (5GS); Stage 3
Technical terms used in this document
   - UE : User Equipment
   - URLLC : Ultra-Reliable Low-Latency Communication
   - eMBB : enhanced Mobile Broadband
   - SSB : Synchronisation Signal Block
   - FR1 : Frequency Range 1, which refers to the frequency range below 6 GHz (e.g., 450 MHz to 6000 MHz).
   - FR2 : Frequency Range 2, which refers to the millimeter wave (mmWave) region above 24 GHz (e.g., 24250 MHz to 52600 MHz).
   - BW : Bandwidth
   - BWP : Bandwidth Part
   - RNTI : Radio Network Temporary Identifier
   - PDSCH : Physical Downlink Shared Channel
   - PUSCH : Physical Uplink Shared Channel
   - PDCCH : Physical Downlink Control Channel
   - MO : Monitoring Occasion
   - XR : An abbreviation for eXtended Reality, referring to virtual reality (VR), augmented reality (AR), and mixed reality (MR).
   - DRX : Discontinuous Reception

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, proposals and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, proposals and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

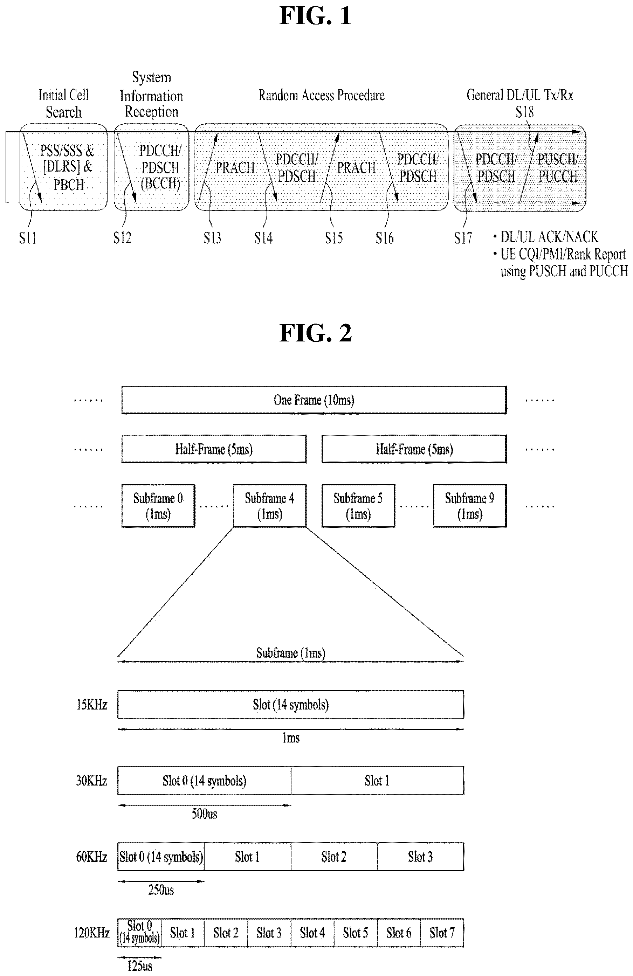

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

The SSB is composed of four consecutive OFDM symbols, each carrying the PSS, the PBCH, the SSS/PBCH, or the PBCH. Each of the PSS and the SSS includes one OFDM symbol by 127 subcarriers, and the PBCH includes three OFDM symbols by 576 subcarriers. The PBCH is encoded/decoded based on Polar codes, and modulation/demodulation is performed thereon according to quadrature phase shift keying (QPSK). The PBCH in the OFDM symbol consists of data resource elements (REs) to which a complex modulation value of the PBCH is mapped, and demodulation reference signal (DMRS) REs to which a DMRS for the PBCH is mapped. Three DMRS REs are configured for each RB in the OFDM symbol, and three data REs configured between DMRS REs.

The PSS may be used in detecting a cell ID within a cell ID group, and the SSS may be used in detecting a cell ID group. The PBCH may be used in detecting an SSB (time) index and a half-frame. There are 336 cell ID groups, and each cell ID group includes three cell IDs. Thus, there are a total of 1008 cell IDs.

SSBs are periodically transmitted with an SSB periodicity. A default SSB periodicity assumed by the UE in initial cell search is defined as 20 ms. After cell access, the SSB periodicity may be set to one of {5 ms, 10 ms, 20 ms, 40 ms, 80 ms, and 160 ms} by the network (e.g., BS). An SSB burst set may be configured at the beginning of the SSB periodicity. The SSB burst set may be set to a time window of 5 ms (i.e., half-frame), and the SSB may be repeatedly transmitted up to L times within the SS burst set. The maximum number of SSB transmissions L may be given depending carrier frequency bands as follows. One slot includes up to two SSBs.
- For frequency range up to 3 GHz, L = 4
- For frequency range from 3GHz to 6 GHz, L = 8
- For frequency range from 6 GHz to 52.6 GHz, L = 64

The time-domain positions of candidate SSBs in the SS burst set may be defined depending on subcarrier spacings. The time-domain positions of the candidate SSBs are indexed from (SSB indices) 0 to L-1 in temporal order within the SSB burst set (i.e., half-frame).

Multiple SSBs may be transmitted within the frequency span of a carrier. Each SSB may not need to have a unique physical layer cell identifier, but different SSBs may have different physical layer cell identifiers.

The UE may acquire DL synchronization by detecting the SSB. The UE may identify the structure of the SSB burst set based on the detected SSB (time) index, and thus the UE may detect a symbol/slot/half-frame boundary. A frame/half-frame number to which the detected SSB belongs may be identified based on system frame number (SFN) information and half-frame indication information.

Specifically, the UE may obtain a 10-bit SFN for a frame to which a PBCH belongs from the PBCH. Then, the UE may obtain 1-bit half-frame indication information. For example, when the UE detects the PBCH in which the half-frame indication bit is set to 0, the UE may determine that an SSB to which the PBCH belongs is included in the first half-frame of the frame. When the UE detects the PBCH in which the half-frame indication bit is set to 1, the UE may determine that an SSB to which the PBCH belongs is included in the second half-frame of the frame. Finally, the UE may obtain the SSB index of the SSB to which the PBCH belongs based on a DMRS sequence and a PBCH payload carried by the PBCH.

After initial cell search, the UE may acquire more specific system information by receiving a physical downlink control channel (PDCCH) and receiving a physical downlink shared channel (PDSCH) based on information of the PDCCH in step S102.

System information (SI) is divided into a master information block (MIB) and a plurality of system information blocks (SIBs). The SI except for the MIB may be referred to as remaining minimum system information (RMSI). Details thereof will be described in the following.

- The MIB includes information/parameters for monitoring a PDCCH scheduling a PDSCH carrying SIB1 (SystemInformationBlock1), and the MIB is transmitted by the BS over the PBCH of an SSB. For example, the UE may check based on the MIB whether there is a CORESET for a Type0-PDCCH common search space. The Type0-PDCCH common search space is a kind of PDCCH search space, which is used to transmit a PDCCH scheduling an SI message. If the Type0-PDCCH common search space exists, the UE may determine (1) a plurality of contiguous RBs and one or more consecutive symbols included in the CORESET and (ii) a PDCCH occasion (e.g., a time-domain location for PDCCH reception, based on information (e.g., pdcch-ConfigSIB1) in the MIB. If the Type0-PDCCH common search space does not exist, pdcch-ConfigSIB 1 provides information on a frequency location at which the SSB/SIB1 exists and information on a frequency range where there are no SSB/SIB1.

- SIB1 includes information related to availability and scheduling (e.g., transmission periodicity, SI-window size, etc.) of the remaining SIBs (hereinafter referred to as SIBx where x is an integer more than or equal to 2). For example, SIB1 may indicate whether SIBx is periodically broadcast or provided at the request of the UE in an on-demand manner. When SIBx is provided in an on-demand manner, SIB1 may include information necessary for the UE to send an SI request. SIB1 is transmitted over a PDSCH, and a PDCCH scheduling SIB1 is transmitted in the Type0-PDCCH common search space. That is, SIB1 is transmitted over the PDSCH indicated by the PDCCH.

- SIBx is included in the SI message and transmitted on the PDSCH. Each SI message is transmitted within a periodically occurring time window (i.e., SI-window).

The UE may perform a random access procedure (e.g., 4-step RA procedure) to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

Hereinafter, a 2-step random access procedure will be described in brief. In the 2-step random access procedure, S103/S105 may be performed in one step (where the UE performs transmission) (message A), and S104/S106 may be performed in one step (where the BS performs transmission) (message B). Message A (MsgA) may include a preamble and a payload (PUSCH payload), and the preamble and payload may be multiplexed based on time division multiplexing (TDM). In response to MsgA, message B (MsgB) may be transmitted for contention resolution, fallback indication(s), and/or backoff indication. The 2-step random access procedure may be subdivided into a contention-based random access (CBRA) procedure and a contention-free random access (CFRA) procedure. In the CFRA procedure, the BS may provide the UE with information on a preamble that the UE needs to transmit in MsgA and information on PUSCH allocation before the UE transmits MsgA.

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The MR system may support signal transmission/reception in unlicensed bands. According to regional regulations for unlicensed bands, a communication node in an unlicensed band needs to determine whether a channel is used by other communication node(s) before transmitting a signal. Specifically, the communication node may perform carrier sensing (CS) before transmitting the signal so as to check whether the other communication node(s) perform signal transmission. When it is determined that the other communication node(s) perform no signal transmission, it is said that clear channel assessment (CCA) is confirmed. When a CCA threshold is predefined or configured by higher layer signaling (e.g., RRC signaling), the communication node may determine that the channel is busy if the detected channel energy is higher than the CCA threshold. Otherwise, the communication node may determine that the channel is idle. When it is determined that the channel is idle, the communication node may start the signal transmission in a UCell. The sires of processes described above may be referred to as Listen-Before-Talk (LBT) or a channel access procedure (CAP). The LBT and CAP may be interchangeably used in this document.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^u) | N ^{slot} _{symb} | N ^{frame,u} ₛₗₒₜ | N ^{subframe,u} ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| N ^{slot}_{symb}: Number of symbols in a ₛₗₒₜ N ^{frame,u}ₛₗₒₜ: Number of slots in a frame N ^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^u) | N ^{slot}_{symb} | N ^{frame,u}ₛₗₒₜ | N ^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

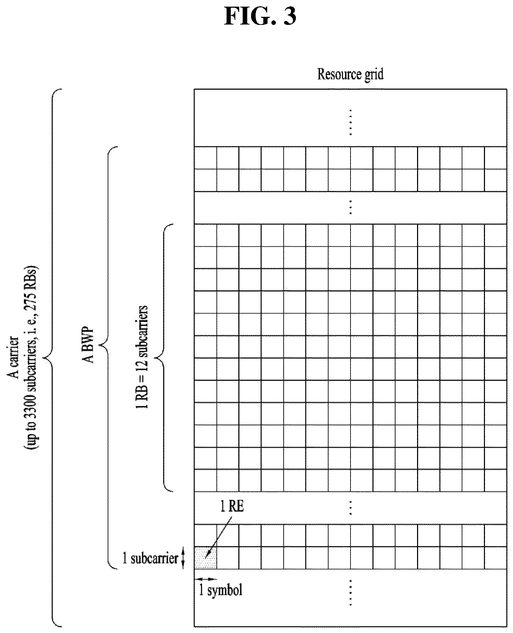

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

### Bandwidth part (BWP)

The NR system may support up to 400 MHz for each carrier. The network may instruct the UE to operate only in a partial bandwidth rather than the whole bandwidth of such a wideband carrier. The partial bandwidth is referred to as a BWP. The BWP refers to a subset of contiguous common RBs defined for a numerology in the BWP of a carrier in the frequency domain, and one numerology (e.g., SCS, CP length, slot/mini-slot duration, etc.) may be configured.

Activation/deactivation of a DL/UL BWP or BWP switching may be performed according to network signaling and/or timers (e.g., L1 signaling corresponding to a physical layer control signal, a MAC control element corresponding to a MAC layer control signal, RRC signaling, etc.). While performing initial access or before setting up an RRC connection, the UE may not receive any DL/UL BWP configurations. A DL/UL BWP that the UE assumes in this situation is referred to as an initial active DL/UL BWP.

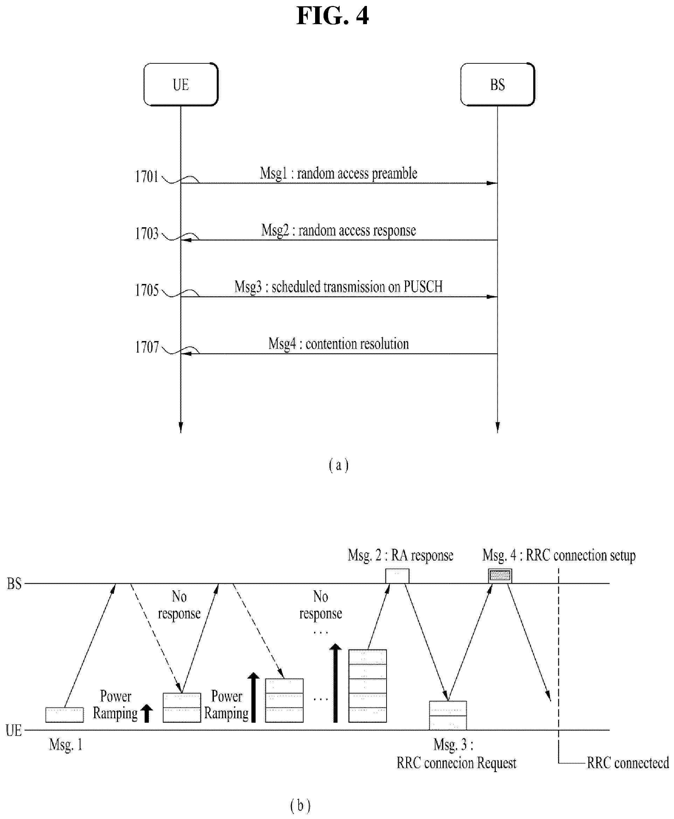

FIG. 4 illustrates an exemplary normal random access procedure. Specifically, FIG. 4 shows a contention-based random access procedure of the UE, which is performed in four steps.

First, the UE may transmit message 1 (Msg1) including a random access preamble on a PRACH (see 1701 of FIG. 4(a)).

Random access preamble sequences with different lengths may be supported. A long sequence length of 839 may be applied to SCSs of 1.25 and 5 kHz, and a short sequence length of 139 may be applied to SCSs of 15, 30, 60, and 120 kHz.

Multiple preamble formats may be defined by one or more RACH OFDM symbols and different CPs (and/or guard times). A RACH configuration for a cell may be included in SI about the cell and provided to the UE. The RACH configuration may include information on the SCS of the PRACH, available preambles, preamble formats, and so on. The RACH configuration may include information about association between SSBs and RACH (time-frequency) resources. The UE transmits a random access preamble on a RACH time-frequency resource associated with a detected or selected SSB.

The threshold of an SSB for RACH resource association may be configured by the network, and a RACH preamble may be transmitted or retransmitted based on an SSB where reference signal received power (RSRP), which is measured based on the SSB, satisfies the threshold. For example, the UE may select one SSB from among SSBs that satisfy the threshold and transmit or retransmit the RACH preamble based on a RACH resource associated with the selected SSB.

Upon receiving the random access preamble from the UE, the BS may transmit message 2 (Msg2) corresponding to a random access response (RAR) message to the UE (see 1703 of FIG. 4(a)). A PDCCH scheduling a PDSCH carrying the RAR may be CRC masked with a random access (RA) radio network temporary identifier (RNTI) (RA-RNTI) and then transmitted. Upon detecting the PDCCH masked by the RA-RNTI, the UE may obtain the RAR from the PDSCH scheduled by DCI carried by the PDCCH. The UE may check whether the RAR includes RAR information in response to the preamble transmitted by the UE, i.e., Msg1. The presence or absence of the RAR information in response to Msg1 transmitted by the UE may be determined depending on whether there is a random access preamble ID for the preamble transmitted by the UE. If there is no response to Msg1, the UE may retransmit the RACH preamble within a predetermined number of times while performing power ramping. The UE may calculate PRACH transmit power for retransmitting the preamble based on the most recent path loss and power ramping counter.

The RAR information transmitted on the PDSCH may include timing advance (TA) information for UL synchronization, an initial UL grant, and a temporary cell-RNTI (C-RNTI). The TA information may be used to control a UL signal transmission timing. The UE may transmit a UL signal over a UL shared channel as message 3 (Msg3) of the random access procedure based on the RAR information (see 1705 of FIG. 4(a)). Msg3 may include an RRC connection request and a UE identifier. In response to Msg3, the network may transmit message 4 (Msg4), which may be treated as a contention resolution message on DL (see 1707 of FIG. 4(a)). Upon receiving Msg4, the UE may enter the RRC_CONNECTED state.

On the other hand, a contention-free random access procedure may be performed when the UE is handed over to another cell or BS or when it is requested by the BS. In the contention-free random access procedure, a preamble to be used by the UE (hereinafter referred to as a dedicated random access preamble) is allocated by the BS. Information on the dedicated random access preamble may be included in an RRC message (e.g., handover command) or provided to the UE through a PDCCH order. When the random access procedure is initiated, the UE may transmit the dedicated random access preamble to the BS. When the UE receives an RAR from the BS, the random access procedure is completed.

As described above, a UL grant in the RAR may schedule PUSCH transmission to the UE. A PUSCH carrying initial UL transmission based on the UL grant in the RAR is referred to as an Msg3 PUSCH. The content of an RAR UL grant may start at the MSB and end at the LSB, and the content may be given as shown in Table 3.

**[Table 3]**

| **RAR UL grant field** | **Number of bits** |
|---|---|
| Frequency hopping flag | 1 |
| Msg3 PUSCH frequency resource allocation | 12 |
| Msg3 PUCH time resource allocation | 4 |
| Modulation and coding scheme (MCS) | 4 |
| Transmit power control (TPC) for Msg3 PUSCH | 3 |
| CSI request | 1 |

In a contention-free random access (CFRA) procedure, the CSI request field in the RAR UL grant indicates whether the terminal includes aperiodic CSI reporting in the corresponding PUSCH transmission. a subcarrier spacing for Msg3 PUSCH transmission is provided by the RRC parameter. The terminal may transmit PRACH and Msg3 PUSCH on the same uplink carrier in the same service providing cell. A UL BWP for Msg3 PUSCH transmission is indicated by SystemInformationBlock1 (SIB1).

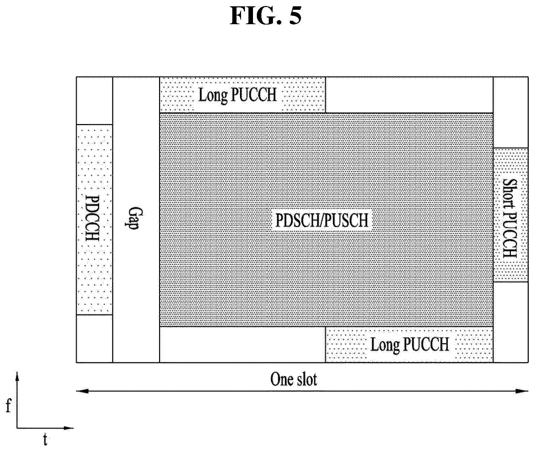

FIG. 5 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.
- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 4 shows the characteristics of each SS.

**[Table 4]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | User specific PDSCH decoding |
| | UE Specific | C-RNTI, or MCS-C-RNTI, or CS-RNTI(s) | |

Table 5 shows DCI formats transmitted on the PDCCH.

**[Table 5]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.
- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

### Alignment between DRX active time start and PDCCH monitoring occasion

In the Rel-18 NR standard, various scenarios and candidate technologies are discussed to support XR services (FS_NR_XR_enh). Since XR services typically require high data rate and low latency, and high power consumption of the UE is expected therefor, various techniques for power saving are being considered.

The traffic model and requirements for XR services are defined in TR38.838, the technical report of the Rel-17 XR study. XR services typically require 60 frames per second (fps). In some cases, 120 fps is required. A frame in the XR traffic model may be understood as the same as a packet received in a communication environment. In addition to this periodic traffic occurrence, jitter may occur due to a number of causes. In this context, jitter means that the actual packet reception is earlier or later than the expected packet reception. The traffic model of the XR service assumes that jitter follows a truncated Gaussian distribution. For example, when the periodic packet reception time is T, the range of actual packet reception is given as [T-4, T+4], and the probability of receiving a packet closer to time T is higher, and the probability of receiving a packet farther away from time T is lower. In this example, the jitter range may be [-4, 4], which may be the range typically assumed in a single stream DL traffic model. Therefore, in order to expect power saving effect through DRX operation in XR service, it is necessary to design the system considering jitter in addition to periodic traffic transmission and reception.

DRX operation and monitoring adaptation operation may be considered to reduce the power of UEs supporting XR services. To meet the requirement of 60fps for XR services, the introduction of non-uniform DRX cycles or non-integer DRX cycles may be considered.

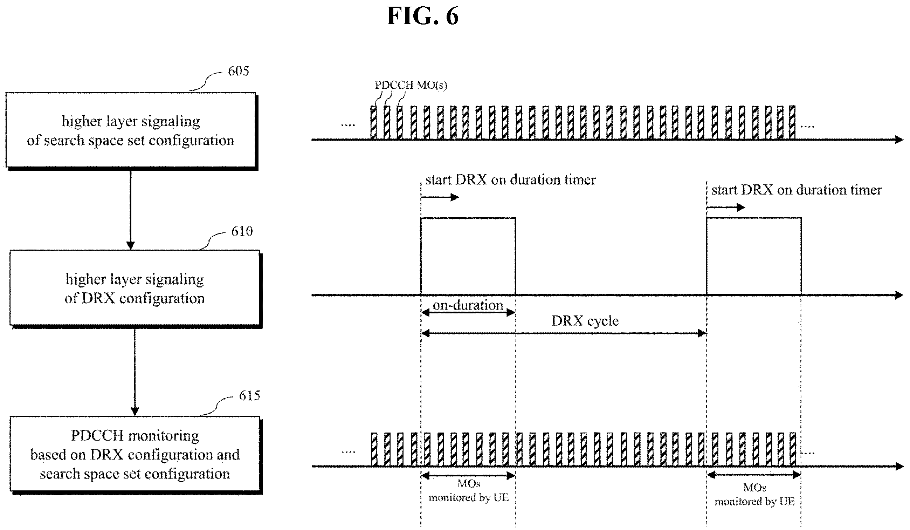

In NR, the following characteristics of DRX may be used to reduce unnecessary power consumption of the UE. DRX structures for UEs in RRC_IDLE state and RRC_CONNECTED state are defined, respectively. By defining periodic intervals in which the UE may expect to receive DL signals, both DRX structures are designed to reduce unnecessary power consumption during other periods. Specifically, in the case of C-DRX (i.e., DRX applied to a UE in the RRC_CONNECTED state), the start position of the on-duration occurs periodically based on the Rel-16 standard of NR. In this case, the size of the period (i.e., DRX cycle) that may be configured may be determined by a higher layer parameter provided by a BS to the UE. FIG. 6 is a diagram illustrating an SS set and C-DRX as defined in the existing NR standard and PDCCH monitoring of the UE based thereon. Referring to FIG. 6, the UE may receive configuration for at least one search space set set through higher layer signaling (605). Depending on the number of configured search space sets and the configured PDCCH monitoring periodicity, the UE may perform PDCCH monitoring relatively frequently (e.g., MO configuration in every slot) (if DRX is not configured), and the power consumption of the UE for PDCCH monitoring may be high. To reduce power consumption of the UE, DRX may be established for the UE through higher layer signaling (610). Specifically, DRX configuration information is received through higher layer (e.g., RRC) signaling, and DRX ON/OFF is controlled by DRX commands at the MAC layer. DRX configuration information may include (i) a value of drx-OnDurationTimer (which defines the length of the start period of the DRX cycle), (ii) a value of drx-InactivityTimer (which defines the length of the time period during which the UE stays awake after detecting a PDCCH occasion indicating initial UL or DL data), (iii) a value of drx-HARQ-RTT-TimerDL (which defines the maximum time period until DL retransmission is received after receiving the initial DL transmission), (iv) a value of drx-HARQ-RTT-TimerUL (which defines the maximum time period until the UL retransmission grant is received after receiving the grant for initial UL transmission), (v) drx-LongCycleStartOffset (which defines the time duration and start point in time of the DRX cycle), and (vi) drx-ShortCycle (optional) (which defines the time duration of the short DRX cycle). The UE with DRX configured may reduce power consumption by receiving DL signals discontinuously. The DRX cycle includes an On Duration and an Opportunity for DRX. The DRX cycle defines the time interval at which the On Duration repeats periodically. The On Duration represents the time period during which the UE monitors the PDCCH. Once DRX is configured, the UE performs PDCCH monitoring only on the MOs included in the On Duration (615). When there is a PDCCH detected through PDCCH monitoring, the UE operates the inactivity timer and remains in the awake state. On the other hand, when there is no detected PDCCH, the UE enters the sleep state after the On Duration ends. Therefore, when DRX is configured, the PDCCH is monitored only on the MOs included in the DRX On duration among the configured PDCCH MOs.

The monitoring adaptation operation refers to adjusting (generally reducing) the number of monitoring operations the UE needs to perform. The UE may have up to 10 SS sets configured per BWP and monitors the PDCCH candidates included in the SS sets. Since the UE should perform blind decoding (BD) for the PDCCH, not knowing when and in which DCI format it will be received, PDCCH monitoring accounts for a large portion of power consumption. Monitoring adaptation means PDCCH monitoring skipping (hereinafter, skipping) and SS set group (SSSG) switching (hereinafter, switching). Skipping is defined as stopping PDCCH monitoring for the indicated duration, and switching is defined as stopping monitoring the SS sets included in the current specific SSSG and starting to monitor SS sets included in another SSSG. When two SSSGs are configured, they may generally be configured as a dense SSSG with many PDCCH monitoring occasions and a sparse SSSG with fewer PDCCH monitoring occasions. When three SSSGs are configured, an additional SSSG may be configured.

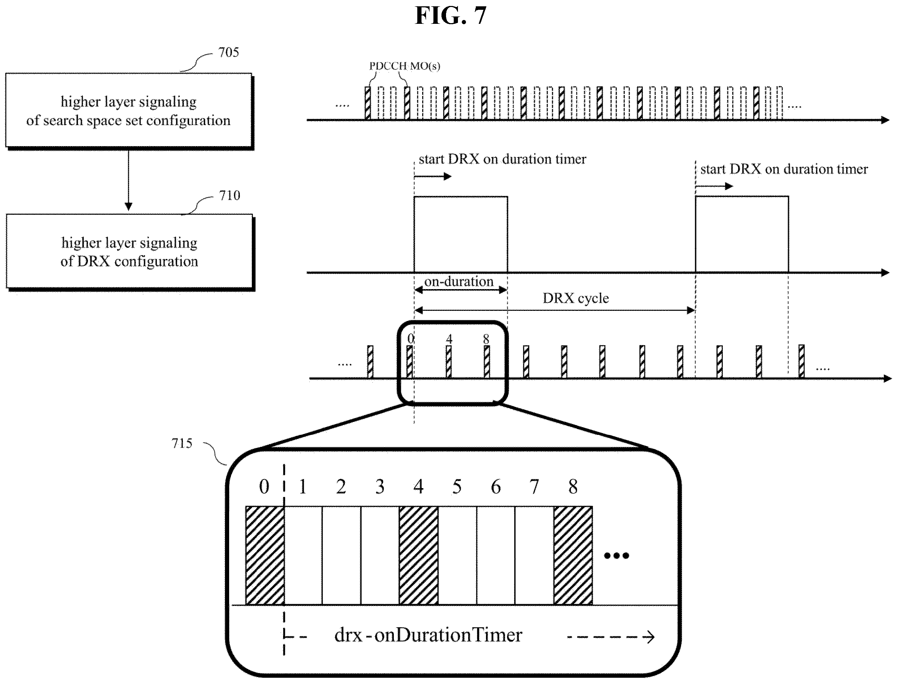

The UE may start DRX Active Time considering jitter and perform PDCCH monitoring adaptation for the purpose of power saving. Due to the indicated monitoring adaptation, the UE may not monitor the PDCCH in the DRX Active Time start slot as it does not monitor the PDCCH in every slot. For example, in Rel-17 above 52.6GHz, 480 kHz or 960 kHz SCS may be used, and the length of one slot is very short in such large SCS. Therefore, monitoring the PDCCH in every slot corresponding to 480 kHz or 960 kHz SCS may be an excessive processing burden and power consumption, and thus the PDCCH may be configured to be monitored only in Y slots within X slots (X>Y). For example, the UE in FIG. 7, which monitors on at least some of the PDCCH MOs according to the search space configuration (705), may perform PDCCH monitoring more sparsely than the UE in FIG. 6.

Configuration of the DRX operation of a UE supporting XR services may differ from that of the DRX operation of the current standard. For example, to meet the 60 fps requirement of XR services, the DRX cycle, currently defined as a uniform integer, may need to be improved. To this end, non-integer cycles such as 16.667 ms, DRX cycle configuration such as {16, 17, 17}ms, and DRX start offset indication are being discussed. Methods of indicating the DRX start time or duration to handle jitter are also being discussed. In other words, to address the challenges of supporting XR services, the start time of DRX operation may not always be uniform, but may change.

A UE supporting XR services may perform monitoring adaptation for the purpose of power saving. For example, considering the jitter that delays the reception of XR packets, the UE may perform sparse PDCCH monitoring (monitoring SS sets belonging to sparse SSSG) although it has started the DRX Active Time. The monitoring occasions (MOs) of all SS sets belonging to sparse SSSG may be configured to have a periodicity of 2 slots or more slots instead of every slot. In this case, when the UE is performing sparse monitoring, there may be no PDCCH monitoring in some slots. The monitoring periodicity of the SS sets is configured separately from the C-DRX periodicity set for the UE and is a fixed value after being configured/changed.

Starting the DRX Active Time (drx-onDurationTimer) may mean starting PDCCH monitoring at the corresponding point in time. However, if the UE starts the DRX Active Time while performing sparse monitoring, there may be no PDCCH monitoring at the start time.

For example, referring to FIG. 7 again, DRX configuration may be provided to the UE through higher layer signaling (710), and the UE may perform C-DRX operation starting drx-onDurationTimer in slot 1, based on the DRX configuration. The UE performs actual PDCCH monitoring in slots 4, 8, and 0 through sparse monitoring operation. The slot numbers here are relative values given for simplicity. Due to non-uniform DRX cycles, the start point of drx-onDurationTimer may be misaligned. When the UE starts drx-onDurationTimer while monitoring PDCCH in slot 0 based on a 16 ms cycle, it may start drx-onDurationTimer in slot 1 in the next DRX cycle, which is 17 ms. In the case where the MO of the SS set is configured for the UE is set to slot 0, slot 4, and slot 8 in at least 4 slot increments, thus the UE starts drx-onDurationTimer at slot 1, it may not perform PDCCH monitoring for 3 slots after the start of DRX Active Time. As in this example, starting DRX Active Time without PDCCH monitoring may not be preferred.

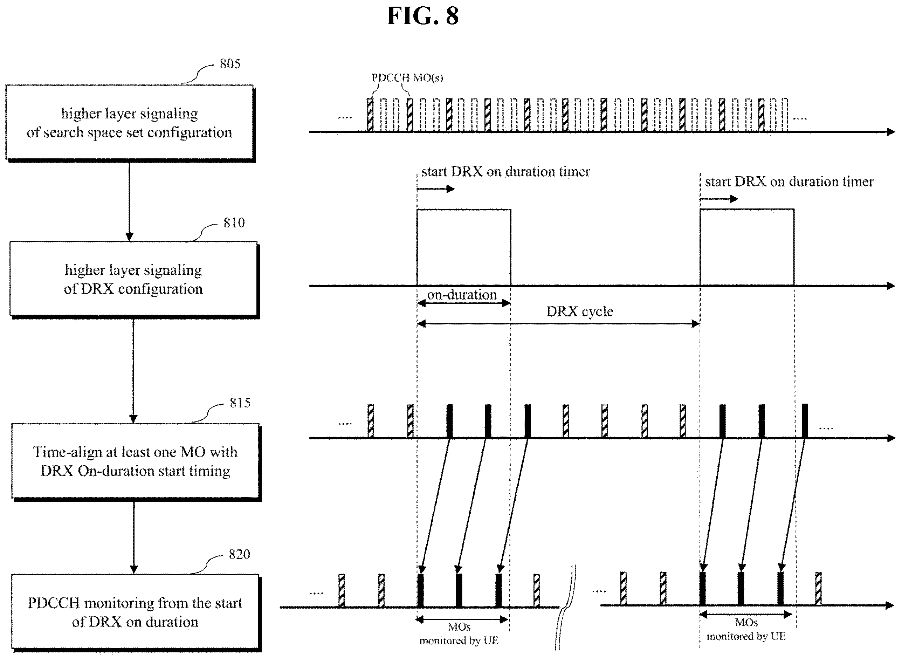

Proposed below is an indication/configuration method that allows the monitoring occasion of SS set to be located in the start slot of DRX Active Time even when the UE is instructed to perform PDCCH monitoring operation that may reduce power consumption to receive XR packets without problems. This method may be called a method to align the start of the DRX Active Time with the monitoring occasion. For example, referring to FIG. 8, the UE may receive the search space set configuration (805) and DRX configuration (810) through higher layer signaling. When there is no PDCCH MO at the start of the On-duration by the DRX configuration (810), the PDCCH MOs according to the search space set configuration (805) and the start of the On-duration according to the DRX configuration (810) may be time-aligned (815). Then, the UE may perform PDCCH monitoring from the start point of the On-duration (820). In the example of FIG. 8, it is assumed that the PDCCH MO is time-shifted as an example of time alignment between the PDCCH MOs and the start of the DRX On-duration, for simplicity. However, the present disclosure is not limited thereto, and various methods for time alignment may be used as will be described later. For example, methods such as changing the slots in which MOs may be configured, configuring additional MOs, and adjusting the start time of the DRX Active Time may be included.

Although the XR service is proposed below as an example, the proposed method may be applied to any case where periodic transmission is scheduled.

Although the proposed methods are described below based on the XR service that requires periodic reception, the methods proposed in the present disclosure are not limited thereto. It will be apparent to those skilled in the art that the methods may be extended and applied to all signals received by the UE with a certain periodicity. Therefore, it is apparent that the proposed methods are applicable to all types of transmission and reception methods expected by the BS and the UE as long as the principle of the present disclosure is not violated, even without separate explanation. Hereafter, for simplicity, the term DRX is used as a general concept including the term C-DRX.

Although the proposed methods are described below based on the NR system, the proposed methods do not limit the transmission and reception forms of NR unless otherwise specified. Also, although examples are described herein based on the characteristics and structure of the C-DRX UE to explain the principle of the present disclosure, the proposed methods are not limited to the support of the C-DRX UE unless otherwise specified.

The distinction of each method or option in the following description is intended to clarify the description and shall not be construed to mean that each must be practiced as an independent invention. For example, each of the methods/options described below may be practiced separately, but at least some of them may also be practiced in combination as long as they do not conflict with each other.

### [Method 11 Configuring monitoring occasion in drx-onDurationTimer start slot

Up to 10 SS sets may be configured in one BWP for the UE. The periodicity and slot offset of the SS sets may be configured through the higher layer parameter monitoringSlotPeriodicity AndOffset. They are given as shown in Table 6, excerpted from TS38.331. Assuming that an SS set with a periodicity of 1 slot is not configured, the reference for determining the presence or absence of an MO in any SS set in the slot may be the smallest SS set with a periodicity that is a multiple of 2 and the smallest SS set with a periodicity that is a multiple of 5.

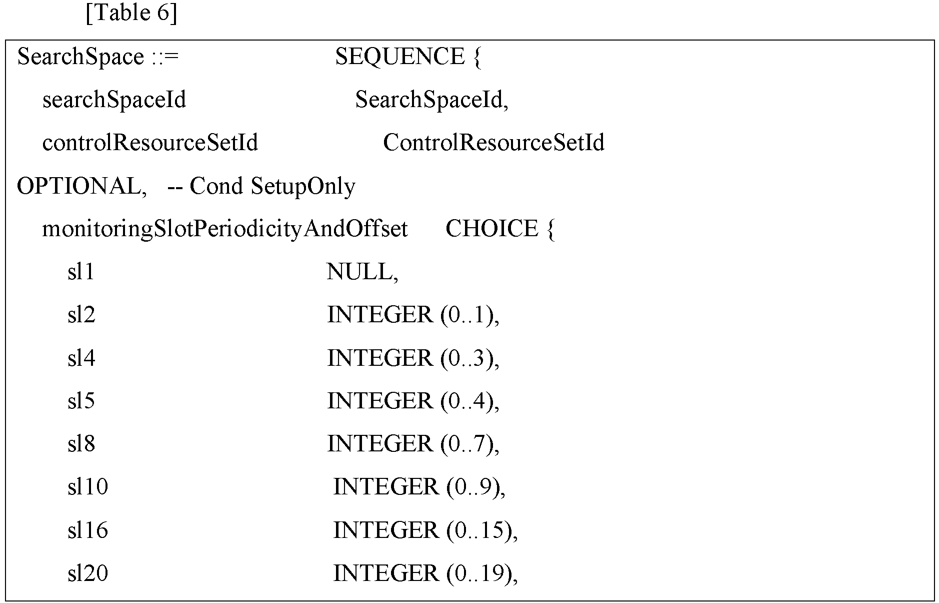

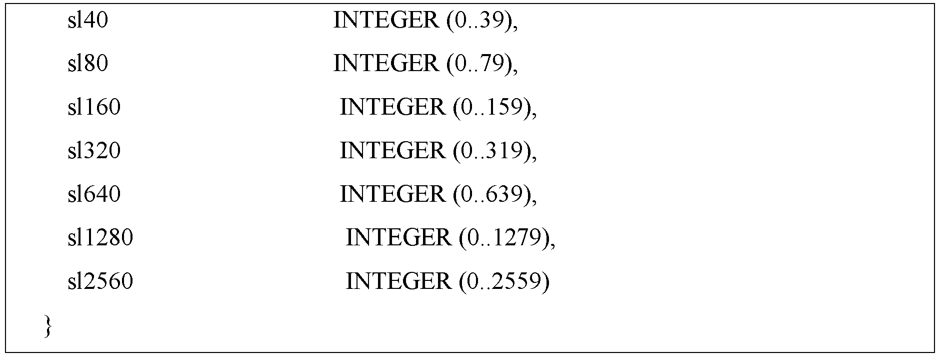

Generally, when two SSSGs are configured for the UE, a dense SSSG (i.e., SSSG#0) and a sparse SSSG (i.e., SSSG#1) may be configured. In this case, the dense SSSG may correspond to the case where the number of included SS sets is large or the periodicity of the MO of the included SS sets is short, and the sparse SSSG may correspond to the case where the number of included SS sets is small or the periodicity of the MO of the included SS sets is long. When three SSSGs are configured, another SSSG may be configured in addition to the two SSSGs described above. Therefore, the SS sets included in the sparse SSSG configured for the UE may have a long MO periodicity, resulting in a small number of times of PDCCH monitoring occasions. When the MO periodicity of the SS sets is long, PDCCH monitoring may not be performed within the slot, as in the example of FIG. 7. This is related to the PDCCH monitoring in the start slot of the DRX Active Time but may not be limited thereto. For example, the proposed methods may also be applied when the UE resumes monitoring for the sparse SSSG after performing PDCCH skipping.

### [Method 1-1] Configuring the MO to start from the drx-onDurationTimer start slot

When there is no MO configured in the slot in which the UE starts drx-onDurationTimer, the MOs of the SS sets configured in other slots may be shifted.

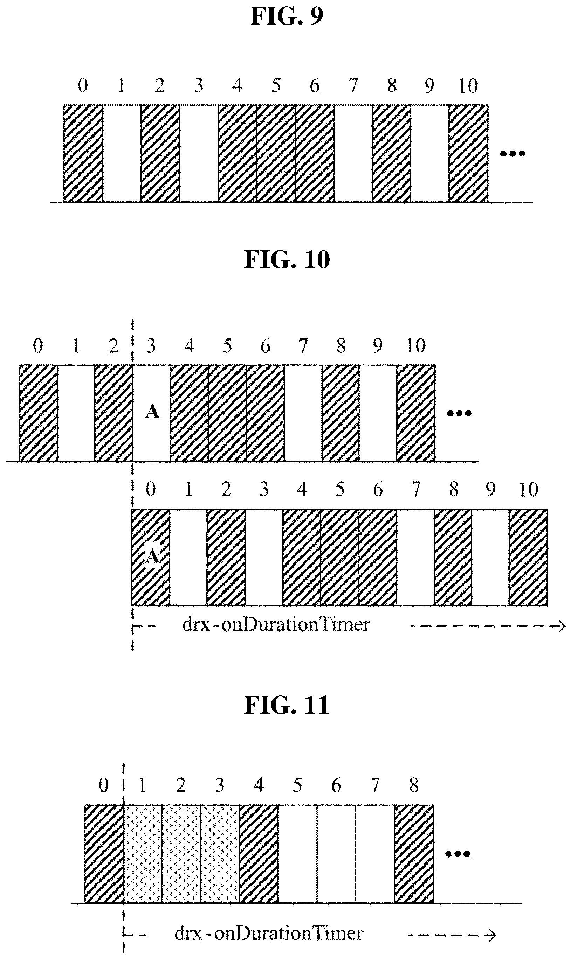

FIG. 9 illustrates a case of monitoring an SS set with a periodicity of 2 slots and an SS set with a periodicity of 5 slots due to monitoring for the sparse SSSG. For simplicity, the slot numbers in FIG. 9 are relative values set based on the monitoring periodicity of the SS sets. The hatched slots (i.e., slots 0, 2, 4, 5, 6, 8, and 10) indicate that the MOs of one or more SS sets are included. Although the C-DRX of the UE is configured to start the drx-onDurationTimer in slot 0 in FIG. 9, it may start the drx-onDurationTimer in slot 1, slot 3, slot 7, or slot 9 for the next DRX Active Time. To prevent the case where there is no MO in the slot in which the drx-onDurationTimer starts, the MO periodicity of the SS sets may be reset based on the slot.

FIG. 10 illustrates the case where the drx-onDurationTimer starts in slot A. The MO periodicity and position of the SS sets configured for the UE are reconfigured based on slot A. In other words, the MOs configured in slot 0 are shifted to slot 3 (= slot A). The MOs in subsequent slots are also sequentially shifted to the next slot. C-DRX configured for the UE may be interpreted as meaning that the MO periodicity of the SS sets starts anew based on the start slot of the drx-onDurationTimer. To calculate this, the slot containing one or more MOs may be considered as slot 0. For example, when the offset of the configured SS sets is at least 3 slots, the third slot in which the MO of the SS set is actually positioned may be calculated as slot 0.

Alternatively, based on the start slot of the drx-onDurationTimer, slot A may be determined as one of the following:
- The nearest slot with one or more MOs among the preceding slots in time;
- The nearest slot with one or more MOs among the following slots in time;
- The nearest slot with one or more MOs among the preceding and following slots in time.

In the example above, the sparse monitoring operation and the start of drx-onDurationTimer are described. However, they may be applied to all cases where the UE resumes PDCCH monitoring but there is no MO configured in the slot. For example, they may be applied even when all SS sets configured for the UE have an MO periodicity of 2 slots or more, or when there is no MO configured in the slot in which PDCCH monitoring is resumed after the PDCCH skipping operation.

The shift of MOs of the SS sets configured in other slots may be limited to be applied only within a certain range. For example, the shift may be applied only to the N slot positions before and after the start slot of the drx-onDurationTimer, and the rest of the positions may maintain the same MO configuration as before. For example, when N=2, the shift is applied only in slot A and the next slot in FIG. 10. For the subsequent MOs, the UE may perform PDCCH monitoring on teh assumption of the MOs of the SS sets as shown in the upper part of FIG. 10. Alternatively, the MOs positioned M slots ahead of the start slot of the drx-onDurationTimer may be shifted to the start slot of the drx-onDurationTimer, and the monitoring operation within the DRX Active Time may remain the same.

The proposed method may also be applied to UEs for which monitoring adaptation is not configured/indicated. It may be applied such that all MOs of up to 10 SS sets configured for the UE are re-started based on the start slot of the drx-onDurationTimer. This may be advantageous when the length of the drx-onDurationTimer is short, and the periodicity of the configured MOs of the SS set is relatively long.

When multiple C-DRXs are configured for the UE, the proposed method may be applied based on the DRX that starts first. For example, the proposed method may be applied in the start slot of the drx-onDurationTimer of DRX1, and then it is not applied again in the start slot of the drx-onDurationTimer of DRX2. This may then continue until both DRX1 and DRX2 terminate.

Alternatively, the proposed method may be applied independently to multiple C-DRXs. For each DRX, MOs may be positioned based on the start slot of the drx-onDurationTimer. In slots in which multiple DRXs overlap, the union of MOs of the DRXs may be considered.

When the previous DRX Active Time continues to extend and overlaps with the next DRX Active Time, the method for multiple C-DRXs may be applied in the same way. In other words, for DRXs that are later in time, the MOs may or may not be repositioned.

When the start offset of the C-DRX is indicated through a wake-up signal (WUS), Method 1-1 may be applied based on the C-DRX-related higher layer configuration periodicity and offset. This may be intended to fundamentally eliminate the synchronization issues for MOs between the BS and the UE.

Alternatively, when the start of the drx-onDurationTimer is delayed or advanced by the WUS, Method 1-1 may be applied for the part that does not overlap with the DRX Active Time based on the start offset indicated by the WUS (when the start of the drx-onDurationTimer is not delayed or advanced by the WUS). For the overlapping part, Method 1-1 may be applied based on the start slot of the drx-onDurationTimer indicated by the higher layer configuration.

The application of the proposed method may vary depending on how the non-uniform C-DRX cycle is indicated. When the C-DRX cycle is fixedly set to {16, 17, 17} ms, the proposed method may be applied without causing any issues.

Issues may arise when the start offset of the C-DRX is indicated. For example, when the start offset of the C-DRX is indicated through a wake-up signal (WUS), the UE may not receive the WUS. According to the DRX configuration, the UE may start the DRX Active Time even when it does not receive the WUS. In this case, the MO may be misaligned because the start slots of drx-onDurationTimer considered by the UE and the BS are different from each other. In the case where the indicated start offset is positive, when the WUS is not received, the BS does not actually transmit the PDCCH for the slot length equal to the offset, but the UE may monitor the PDCCH. If the UE does not receive any PDCCH for the slot length corresponding to the minimum value of the offset that may be indicated in the configuration, it may monitor all SS sets from the next slot. In the case where the indicated start offset is negative, when the WUS is not received, the BS actually transmits the PDCCH for the slot length of the offset, but the UE may not monitor the PDCCH. If the BS does not receive a response to the PDCCH transmitted for the slot length corresponding to the minimum value of the offset that may be indicated in the configuration, it may determine that the MO has been shifted by applying the proposed method from the next slot, and transmit the PDCCH based on the determination.

Alternatively, as a more general countermeasure for not receiving the WUS, when the UE does not receive the PDCCH for a specific period of time, it may monitor all SS sets. When the BS does not receive a response to the PDCCH for a specific period of time, it may transmit the PDCCH through an SS set included in all SSSGs redundantly, or transmit multiple PDCCHs through the SS sets included in the SSSGs, respectively.

### [Method 1-2] Configuring an additional MO in the start slot of drx-onDurationTimer

When there is no MO configured in the slot in which the UE starts the drx-onDurationTimer, an additional MO may be configured in a certain range of slots including the slot.

FIG. 11 illustrates the case where the drx-onDurationTimer starts in slot 1. In this case, the UE does not monitor the PDCCH for 3 slots after starting the DRX Active Time. To address this issue, additional MOs may be configured in slots 1, 2, and 3 before slot 4, in which an MO is configured for the UE. Additional MOs may be configured for some or the minimum number of slots, not all of slots 1, 2, and 3.

Examples of SS sets that may be the target of additional MOs are as follows:
- All SS sets configured for the UE;
- SS sets included in the SSSG currently configured for the UE to monitor;
- Dense SSSG (which may be the SSSG with the most frequent PDCCH monitoring among the SSSGs configured for the UE, generally SSSG#0).

Examples of the range of slots in which additional MOs may be configured are as follows:
- Fixed value (e.g., 4 slots);
- A value related to the start offset that may be indicated to the UE (e.g., the greatest/least value among the offsets);
- The least periodicity value of the SS sets currently configured for the UE to monitor or a value less than the least value by 1;
- A value related to the SSSG switching timer.

In the example of FIG. 11, the smallest periodicity of the SS sets currently configured for the UE to monitor is 4 slots, and thus additional MOs may be set in the range of 3 slots. Alternatively, to maintain power saving benefits, additional MOs may be configured for only 1 slot.

Additional MOs may be newly configured for each DRX Active Time according to the proposed conditions and method. This may prevent unnecessary configuration because additional MOs do not need to be configured when the proposed method does not need to be applied (e.g., when an MO is configured in the drx-onDurationTimer start slot).

Additional MOs may be configured on only specific conditions. For example, they may be configured only when the periodicity of all SS sets configured for the UE is at least X slots. This is intended to prevent excessive power consumption of the UE compared to the latency gain from configuring additional MOs.

As in Method 1-1, this method may be applied to all cases where the UE resumes PDCCH monitoring but there is no MO configured in the slot. For example, it may be applied when all SS sets configured for the UE have an MO periodicity of 2 slots or more, or when there is no MO configured in the slot in which PDCCH monitoring is resumed after the PDCCH skipping operation.

The proposed method may also be applied to UEs for which monitoring adaptation is not configured/indicated. It may be applied when up to 10 SS sets configured for the UE have a periodicity of 2 slots or more.

When multiple C-DRXs are configured for the UE, the proposed method may be applied based on the DRX that starts first. For example, the proposed method may be applied in the start slot of the drx-onDurationTimer of DRX1, and then it is not applied again in the start slot of the drx-onDurationTimer of DRX2. In other words, additional MOs may be configured only for the DRX that started first.

Alternatively, the proposed method may be applied independently to multiple C-DRXs. Additional MOs may be configured for each DRX based on the start slot of the drx-onDurationTimer. In slots in which multiple DRXs overlap, the UE may monitor the union of the MOs of the DRXs.

When the previous DRX Active Time continues to extend and overlaps with the next DRX Active Time, the method for multiple C-DRXs may be applied in the same way. In other words, for DRXs that are later in time, additional MOs may or may not be configured.

The application of the proposed method may vary depending on how the non-uniform C-DRX cycle is indicated. When the C-DRX cycle is fixedly set to {16, 17, 17} ms, the proposed method may be applied without causing any issues.

When the start offset of the C-DRX is indicated, Method 1-2 may be more advantageous than Method 1-1. For example, when the start offset of the C-DRX is indicated through a wake-up signal (WUS), the UE may not receive the WUS. According to the DRX configuration, the UE may start the DRX Active Time even when it does not receive the WUS. In this case, although the drx-onDurationTimer start slots considered by the UE and the BS are different from each other, there is no change in the monitoring periodicity of the SS sets. Only the configuration status of additional MOs may vary depending on the presence or absence of MOs in the drx-onDurationTimer start slot. In the case where the indicated start offset is positive, when the WUS is not received, the BS does not actually transmit the PDCCH for the slot length equal to the offset, but the UE may monitor the PDCCH. This may cause a loss in power consumption of the UE, but it does not cause any problems in terms of data transfer.

In the case where the indicated start offset is negative, when the WUS is not received, the BS actually transmits the PDCCH for the slot length of the offset, but the UE may not monitor the PDCCH. However, this is the same general issue that may occur when the UE does not receive the WUS, and the same solution may be applied.

Configuration of additional MOs may be applied to both the drx-onDurationTimer start slot based on the start offset of the C-DRX and the drx-onDurationTimer start slot based on the higher layer configuration (when the start offset of the C-DRX is not indicated). This may be intended to avoid the case where the indicated start offset of the C-DRX is not applied because the UE does not receive the WUS.

### [Method 2] Determining drx-onDurationTimer start slot based on monitoring occasion

To meet the requirements of XR services such as 60 fps (or 120 fps), the following methods may be discussed:
- Non-uniform CDRX cycle pattern
- Dynamic signaling indicated adjustment of CDRX start offset/duration
- Semi-static configurations of drx_startoffset to match the traffic periodicity

As may be seen from the candidate techniques above, the start of the drx-onDurationTimer may be determined in a fixed pattern, adjusted through dynamic signaling, or adjusted by semi-static configuration. Therefore, the drx-onDurationTimer start slot may be adjusted based on the MO of the SS set configured for the UE is proposed. For example, it may be configured in the form of an offset.

When there is no MO configured in the slot in which the drx-onDurationTimer is to be started, the UE may not start the drx-onDurationTimer in the slot, but may start the drx-onDurationTimer in the nearest slot with MOs of one or more SS sets among the slots before or after the slot in time. The slot in which the drx-onDurationTimer is changed to start may be one of the following: a slot earlier in time, a slot later in time, or the nearest slot among earlier and later slots. In other words, the offset may be positive or negative, or a value whose absolute value is the least among the positive and negative values may be selected as the offset.

In this case, when the slot is an earlier slot in time, it may need to be a slot that guarantees MinTimeGap (a value that is X slots prior to the beginning of a slot in which the UE would start the drx-onDurationTimer) reported by the UE.

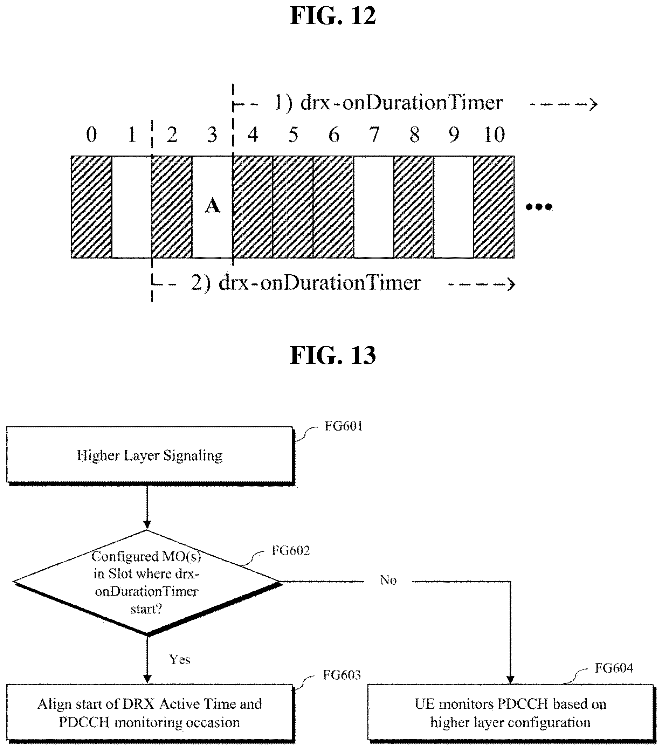

FIG. 12 illustrates the case where the UE starts the drx-onDurationTimer in slot 2 or slot 4 because there is no MO configured in slot A in which the drx-onDurationTimer is to be started. The nearest slot with MOs of one or more SS sets among the slots before slot A in time is slot 2, and the nearest slot with MOs of one or more SS sets among the slots after slot A in time is slot 4. Therefore, the UE may depending on the configuration, it may start the drx-onDurationTimer in slot 2 or slot 4 even though it should start the drx-onDurationTimer in slot A.

The method is applicable in all cases where the UE resumes PDCCH monitoring but there is no MO configured in the slot. For example, it may be applied when MOs of all SS sets configured for the UE have a periodicity of 2 slots or more, or when there is no MO configured in the slot in which PDCCH monitoring is resumed after the PDCCH skipping operation.

When multiple C-DRXs are configured for the UE, the proposed method may be applied based on the DRX that starts first. For example, the proposed method may be applied in the start slot of the drx-onDurationTimer of DRX1, and then it is not applied again in the start slot of the drx-onDurationTimer of DRX2. In other words, additional MOs may be configured only for the DRX that started first.

Alternatively, the proposed method may be applied independently to multiple C-DRXs. The drx-onDurationTimer start slot may be changed based on the MOs configured for each DRX. In slots in which multiple DRXs overlap, the UE may monitor the union of the MOs of the DRXs.

When the previous DRX Active Time continues to extend and overlaps with the next DRX Active Time, the method for multiple C-DRXs may be applied in the same way. In other words, the drx-onDurationTimer start slot may or may not be changed for DRXs that are later in time.

The application of the proposed method may vary depending on how the non-uniform C-DRX cycle is indicated. When the C-DRX cycle is fixedly set to {16, 17, 17} ms, the proposed method may be applied without causing any issues.

When the start offset of the C-DRX is indicated, the offset proposed in Method 2 may be added to the indicated start offset of the C-DRX. When the start offset of the C-DRX is indicated by the WUS, the UE may not receive the WUS. This is the same general issue that may occur when the UE does not receive the WUS, and the same solution may be applied.

### [Method 3] Methods 1 and 2 may be applied differently depending on the SS set.

Methods 1 and 2 proposed above have been described based on the case where there is no MO configured in a specific slot. Methods 1 and 2 may be limited to slots in which MOs (or a set of MOs) for a specific purpose are not configured, rather than to slots in which no MO is configured. In other words, when some MOs are configured but MOs (or a set of MOs) for a specific purpose are not configured in a slot in which the drx-onDurationTimer starts, Methods 1 and 2 may be applied.

For example, MOs (or a set of MOs) for a specific purpose may be limited to MOs for the SS set in which scheduling DCI may be received. Because the purpose of the proposal is to prevent the delay in receiving XR packets by a UE in the configured C-DRX, the proposed method may not be applied to unnecessary MOs. In other words, in this proposal, the purpose is to allow the UE to receive DCI for scheduling an XR packet in a slot in which the drx-onDurationTimer starts, and therefore the MO of an SS set in which DCI excluding the scheduling DCI may be received may not be the target.

As another example, an MO (or a set of MOs) for a specific purpose may be a UE-specific search space (USS). In other words, when the MO for the USS is not configured in the slot in which the UE starts the drx-onDurationTimer and only the MO for the common search space (CSS) is configured, the proposal may be applied. This may be because the scheduling for receiving XR packets is not indicated through the CSS for the UE. This is because the purpose of the above example and the proposed method is to prevent the delay in the reception of XR packets by the UE in the configured C-DRX, and thus the proposed method may not be applied to unnecessary MOs.

The MO of the SS set to which Method 1-1 is applied may be distinguished. For example, it may be more preferable not to apply Method 1-1 to the MO of the SS set in which the DCI including the CRC scrambled by the RNTI not controlled by the DRX functionality may be detected or the MO of the CSS. This is because the purpose of Method 1-1 is to prevent the delay in the reception of XR packets by the UE in the configured C-DRX, and thus the shift may not be applied to unnecessary MOs.

In this embodiment, an operation is proposed to address the latency issues related to XR packet reception that may arise when a UE with DRX operation configured performs an operation aimed at power saving while supporting XR service. Through this operation, the UE may smoothly receive XR packets without delay while performing an operation to reduce power consumption.

FIG. 13 schematically illustrates an example of a sequence of UE operations to align the start time of DRX Active Time and the start time of PDCCH monitoring by determining whether an MO is configured in a slot in which drx-onDurationTimer starts.

A UE may receive higher layer signaling related to DRX and the proposed methods from a BS (FG601). The higher layer signaling may include the periodicity of DRX and related configurations (such as indications through a non-uniform periodicity or start offset), a method of configuring MOs in the slot in which drx-onDurationTimer starts (which may correspond to Method 1 or 2 proposed above), and the characteristics of the target MOs. The UE determines whether the target MO is configured in the start slot of drx-onDurationTimer (FG602). When the target MO is not configured in the start slot of drx-onDurationTimer, the MO may be configured in the slot using Method 1 or 2 (FG603). When the target MO is configured in the start slot of drx-onDurationTimer, the UE may perform PDCCH monitoring based on the higher layer configuration (MO of the configured SS set) (FG604).

Unless otherwise noted, the proposed methods may be applied to any DRX structure or PDCCH monitoring of the UE, as long as the principles of the disclosure are not violated, even without further explanation.

According to this proposal, the UE with DRX operation configured may smoothly receive XR packets without latency issues in performing operations for power saving while supporting XR service. Also, even when the UE needs to perform PDCCH monitoring but there is no configured MO, the proposal may be used to configure an MO to smoothly monitor the PDCCH.

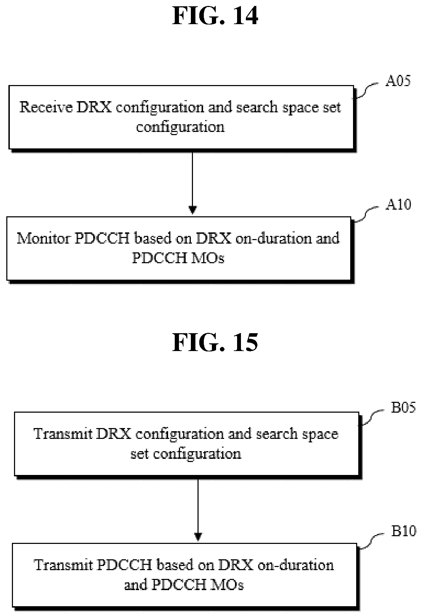

FIG. 14 is a diagram illustrating a flow of a method of receiving a signal by a UE according to one embodiment.

Referring to FIG. 14, the UE may receive a discontinuous reception (DRX) configuration related to a DRX on-duration and a search space set configuration related to physical downlink control channel (PDCCH) monitoring occasions (MOs) (A05).

The UE may monitor a PDCCH based on the DRX on-duration and the PDCCH MOs (A10).

Time alignment may be performed between the DRX on-duration related to the DRX configuration and the PDCCH MOs related to the search space set configuration. Based on the time alignment between the DRX on-duration and the PDCCH MOs, at least one of the PDCCH MOs may be configured on a time resource in which the DRX on-duration starts. The UE may start monitoring the PDCCH from the time resource in which the DRX on-duration starts starts.

An initial PDCCH MO among the PDCCH MOs may be time-aligned with the start of the DRX on-duration.

A periodicity of the PDCCH MOs may restart in a start slot of the DRX on-duration.

Based on a PDCCH MO not being configured in the start slot of the DRX on-duration, at least one of the PDCCH MOs may be shifted to the start slot of the DRX on-duration.

Based on a PDCCH MO not being configured in the start slot of the DRX on-duration, at least one PDCCH MO may be additionally configured.

One of the at least one additionally configured PDCCH MO may be positioned in the start slot of the DRX on-duration.

The start slot of the DRX on-duration may be determined based on the PDCCH MOs.

The PDCCH may be related to scheduling of eXtended Reality (XR) traffic, and the UE may receive a physical downlink shared channel (PDSCH) containing the XR traffic based on the PDCCH.

FIG. 15 is a diagram illustrating a flow of a method of transmitting a signal by a BS according to one embodiment.

Referring to FIG. 15, the BS may transmit a discontinuous reception (DRX) configuration related to a DRX on-duration and a search space set configuration related to physical downlink control channel (PDCCH) monitoring occasions (MOs) (B05).

The BS may transmit a PDCCH based on the DRX on-duration and the PDCCH MOs (B10).

Time-alignment between the DRX on-duration related to the DRX configuration and the PDCCH MOs related to the search space set configuration may be performed. Also, based on the time-alignment between the DRX on-duration and the PDCCH MOs, at least one of the PDCCH MOs may be configured on a time resource in which the DRX on-duration starts, and the BS may transmit the PDCCH on the time resource in which the DRX on-duration starts. The start of the DRX on-duration may be time-aligned with an initial PDCCH MO among the PDCCH MOs.

A periodicity of the PDCCH MOs may restart in a start slot of the DRX on-duration.

Based on a PDCCH MO not being configured in the start slot of the DRX on-duration, at least one of the PDCCH MOs may be shifted to the start slot of the DRX on-duration.

Based on a PDCCH MO not being configured in the start slot of the DRX on-duration, at least one PDCCH MO may be additionally configured.

One of the at least one additionally configured PDCCH MO may be positioned in the start slot of the DRX on-duration.

The start slot of the DRX on-duration may be determined based on the PDCCH MOs.

The PDCCH may be related to scheduling of eXtended Reality (XR) traffic, and the BS may transmit a physical downlink shared channel (PDSCH) containing the XR traffic based on the PDCCH.

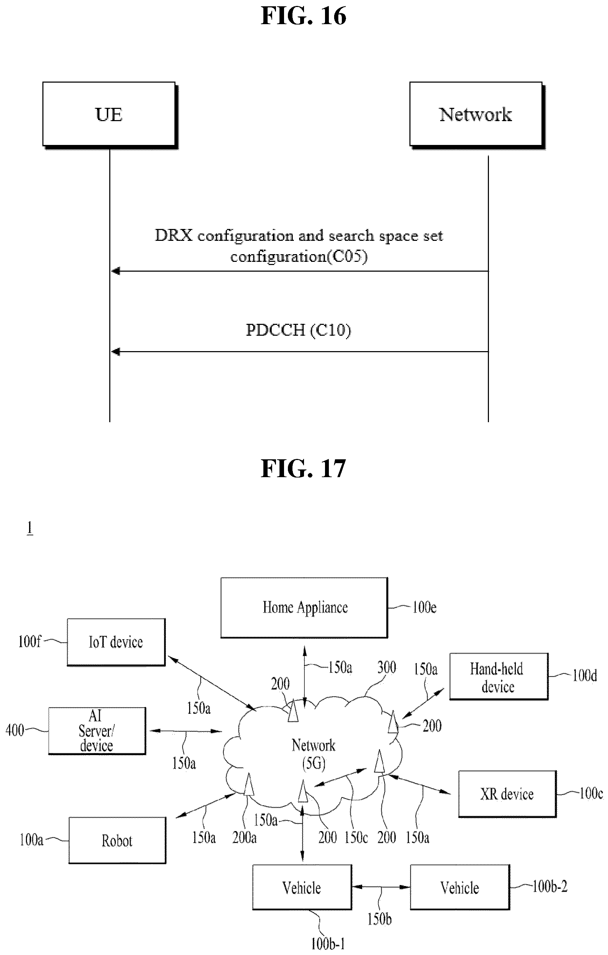

FIG. 16 is a diagram illustrating a flow of a method of transmitting and receiving signals over a network according to one embodiment.

Referring to FIG. 16, the network may transmit a discontinuous reception (DRX) configuration related to a DRX on-duration and a search space set configuration related to physical downlink control channel (PDCCH) monitoring occasions (MOs) (C05). The UE may monitor and receive a PDCCH based on the DRX on-duration and the PDCCH MOs.

The network may transmit a PDCCH based on the DRX on-duration and the PDCCH MOs, and the UE may receive the same.

Time-alignment between the DRX on-duration related to the DRX configuration and the PDCCH MOs related to the search space set configuration may be performed. Also, based on the time-alignment between the DRX on-duration and the PDCCH MOs, at least one of the PDCCH MOs may be configured on a time resource in which the DRX on-duration starts, and the UE may start monitoring the PDCCH from the time resource in which the DRX on-duration starts. The start of the DRX on-duration may be time-aligned with an initial PDCCH MO among the PDCCH MOs.

A periodicity of the PDCCH MOs may restart in a start slot of the DRX on-duration.

Based on a PDCCH MO not being configured in the start slot of the DRX on-duration, at least one of the PDCCH MOs may be shifted to the start slot of the DRX on-duration.

Based on a PDCCH MO not being configured in the start slot of the DRX on-duration, at least one PDCCH MO may be additionally configured.

One of the at least one additionally configured PDCCH MO may be positioned in the start slot of the DRX on-duration.

The start slot of the DRX on-duration may be determined based on the PDCCH MOs.

The PDCCH may be related to scheduling of eXtended Reality (XR) traffic, and the UE may receive a physical downlink shared channel (PDSCH) containing the XR traffic based on the PDCCH.

FIG. 17 illustrates a communication system 1 applied to the present disclosure.

Referring to FIG. 17, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

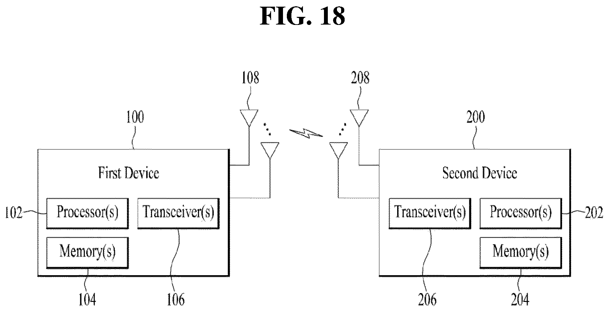

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

The above-described embodiments are combinations of elements and features of the present disclosure in specific forms. The elements or features may be considered selective unless mentioned otherwise. Each element or feature may be implemented without being combined with other elements or features. Further, the embodiments of the present disclosure may be configured by combining some elements and/or some features. Operation orders described in the embodiments of the present disclosure may be rearranged. Some constructions or features of any one embodiment may be included in another embodiment or may be replaced with corresponding constructions or features of another embodiment. It is obvious that claims that are not explicitly cited in the appended claims may be presented in combination as an embodiment of the present disclosure or included as a new claim by subsequent amendment after the application is filed.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### [Industrial Applicability]

The present disclosure is applicable to UEs, BSs, or other apparatuses in a wireless mobile communication system.

## Claims

1. A method of receiving a signal by a user equipment (UE) in a wireless communication system, the method comprising:
receiving a discontinuous reception (DRX) configuration related to a DRX on-duration and a search space set configuration related to physical downlink control channel (PDCCH) monitoring occasions (MOs); and
monitoring a PDCCH based on the DRX on-duration and the PDCCH MOs,
wherein time-alignment is performed between the DRX on-duration related to the DRX configuration and the PDCCH MOs related to the search space set configuration,
wherein, based on the time-alignment between the DRX on-duration and the PDCCH MOs, at least one of the PDCCH MOs is configured on a time resource in which the DRX on-duration starts, and
wherein the UE starts the monitoring of the PDCCH from the time resource in which the DRX on-duration starts.

2. The method of claim 1, wherein an initial PDCCH MO among the PDCCH MOs is time-aligned with the start of the DRX on-duration.

3. The method of claim 1, wherein a periodicity of the PDCCH MOs restarts in a start slot of the DRX on-duration.

4. The method of claim 1, wherein, based on a PDCCH MO not being configured in the start slot of the DRX on-duration, at least one of the PDCCH MOs is shifted to the start slot of the DRX on-duration.

5. The method of claim 1, wherein, based on a PDCCH MO not being configured in the start slot of the DRX on-duration, at least one PDCCH MO is additionally configured.

6. The method of claim 5, wherein one of the at least one additionally configured PDCCH MO is positioned in the start slot of the DRX on-duration.

7. The method of claim 1, wherein the start slot of the DRX on-duration is determined based on the PDCCH MOs.

8. The method of claim 1, wherein the PDCCH is related to scheduling of eXtended Reality (XR) traffic, and
wherein the UE receives a physical downlink shared channel (PDSCH) containing the XR traffic based on the PDCCH.

9. A computer-readable recording medium storing instructions for performing the method of claim 1.

10. A device for wireless communication, the device comprising:
a memory configured to store instructions; and
a processor configured to perform operations by executing the instructions,
wherein the operations of the processor comprise:
receiving a discontinuous reception (DRX) configuration related to a DRX on-duration and a search space set configuration related to physical downlink control channel (PDCCH) monitoring occasions (MOs); and
monitoring a PDCCH based on the DRX on-duration and the PDCCH MOs,
wherein time-alignment is performed between the DRX on-duration related to the DRX configuration and the PDCCH MOs related to the search space set configuration,
wherein, based on the time-alignment between the DRX on-duration and the PDCCH MOs, at least one of the PDCCH MOs is configured on a time resource in which the DRX on-duration starts, and
wherein the processor starts the monitoring of the PDCCH from the time resource in which the DRX on-duration starts.

11. The device of claim 10, further comprising:
a transceiver configured to transmit or receive a signal under control of the processor,
wherein the device is a user equipment (UE) operating in a wireless communication system.

12. The device of claim 10, wherein the device is an application specific processor (ASIC) or digital signal processing device configured to control a user equipment (UE) operating in a wireless communication system.

13. A method of transmitting a signal by a base station in a wireless communication system, the method comprising:
transmitting a discontinuous reception (DRX) configuration related to a DRX on-duration and a search space set configuration related to physical downlink control channel (PDCCH) monitoring occasions (MOs); and
transmitting a PDCCH based on the DRX on-duration and the PDCCH MOs,
wherein time-alignment is performed between the DRX on-duration related to the DRX configuration and the PDCCH MOs related to the search space set configuration,
wherein, based on the time-alignment between the DRX on-duration and the PDCCH MOs, at least one of the PDCCH MOs is configured on a time resource in which the DRX on-duration starts, and
wherein the base station transmits the PDCCH on the time resource in which the DRX on-duration starts.

14. A base station for wireless communication, the base station comprising:
a memory configured to store instructions; and
a processor configured to perform operations by executing the instructions,
wherein the operations of the processor comprise:
transmitting a discontinuous reception (DRX) configuration related to a DRX on-duration and a search space set configuration related to physical downlink control channel (PDCCH) monitoring occasions (MOs); and
transmitting a PDCCH based on the DRX on-duration and the PDCCH MOs,
wherein time-alignment is performed between the DRX on-duration related to the DRX configuration and the PDCCH MOs related to the search space set configuration,
wherein, based on the time-alignment between the DRX on-duration and the PDCCH MOs, at least one of the PDCCH MOs is configured on a time resource in which the DRX on-duration starts, and
wherein the processor transmits the PDCCH on the time resource in which the DRX on-duration starts.
